# EUROPEAN PATENT APPLICATION

(11) **EP 4 427 585 A1**
(43) Date of publication of application: **11.09.2024**
(21) Application number: 23890789.3
(22) Date of filing: 14.11.2023
(51) Int. Cl.: A01K 1/01

(54) **CAT LITTER CLEANING METHOD AND AUTOMATIC CAT LITTER BOX**

(30) Priority: 15.11.2022 CN 202211430813
(71) Applicant: Petgugu Technology Pte. Ltd., Singapore 059819 (SG)
(72) Inventor: HUANG, Hongye, Suzhou, Jiangsu 215200 (CN); JIAN, Weiping, Suzhou, Jiangsu 215200 (CN); QIN, Weiyu, Suzhou, Jiangsu 215200 (CN)
(74) Representative: Ipside
(86) International application number: PCT/CN2023/131634
(87) International publication number: WO 2024/104356

(57) **Abstract**

The present application provides a cat litter cleaning method, belonging to the field of pet cleaning devices. The cat litter cleaning method includes: driving a container and a separator to rotate as a whole to a first preset angle; and making the container stop rotating, driving the separator to rotate to a second preset angle, and guiding excrement to be discharged in an inclined direction of the separator. By changing a rotating method of the container, the container and the separator are first rotated as a whole, so that the cat litter is completely in contact with the separator, the excrement is separated, and then the separator is separately rotated so as to clean up and discharge the excrement. Compared with the existing solution, the container has a smaller rotation angle, and does not need to be turned over as a whole by more than 360 degrees, thereby reducing the energy consumption, and meanwhile also reducing rolling degree of the cat litter in the container, and thus noises are reduced, and the separator may be separately detached or directly cleaned separately through the opening, which improves the hygienic cleaning effect. The present application further provides an automatic cat litter tray.

## Description

### CROSS-REFERENCE TO RELATED APPLICATION

The present application claims priority to the Chinese patent application with the filing No. 202211430813.5, filed with the China National Intellectual Property Administration on November 15, 2022 and entitled "CAT LITTER CLEANING METHOD AND AUTOMATIC CAT LITTER TRAY", the contents of which are incorporated herein by reference in entirety.

### TECHNICAL FIELD

The present application relates to the field of pet devices, and particularly to a cat litter cleaning method and an automatic cat litter tray.

### BACKGROUND ART

At present, with people's increasing demand for companionship of pets, the demand for excrement cleaning devices, such as cat litter trays, is also greatly increased. Existing cat litter trays mostly include a drum and a grille fixedly connected to an inner side wall of the drum. Through axial rotation of the drum, cat litter with small granularity passes through the grille, and excrement with large granularity is filtered out and then discharged through, such as, a sliding track or a channel. Although this method can achieve the effect of automatically cleaning the cat litter, such cat litter tray requires a long track which is easy to be contaminated by the excrement, thus increasing the inconvenience of cleaning. Meanwhile, as a positional angle between the drum and the grille is also fixed, the drum needs to rotate at least one turn so as to ensure that all cat litter falls down from the grille, and thus the cat litter is ensured to be separated from the excrement, and the cleaning process thus is also inefficient.

Therefore, it is necessary to provide a cat litter separating method, so as to solve the problem of low cleaning efficiency of the cat litter trays in the prior art.

### SUMMARY

The objective of the present application is to overcome the defects existing in the prior art. The present application provides a cat litter cleaning method and an automatic cat litter tray with a simple structure and high cleaning efficiency.

Technical solution: a cat litter cleaning method includes the following steps:
driving a container and a separator to rotate as a whole to a first preset angle; and
making the container stop rotating, driving the separator to rotate to a second preset angle, and guiding excrement to be discharged in an inclined direction of the separator.

Further, the cat litter cleaning method further includes the following steps:
collecting the excrement discharged through the separator into a stirring chamber, injecting water into the stirring chamber to a preset value, and stirring and crushing a mixture of the excrement and water in the stirring chamber and then discharging the same through a water discharge pipe.

Further, before driving the container and the separator to rotate, the cat litter cleaning method further includes the following steps:
periodically detecting whether there is a pet in the container, and driving the container and the separator to rotate, if it is determined that there is a pet in the container within consecutive cycles and when it is determined in a next cycle that there is no pet in the container.

Further, the first preset angle is not greater than 180 degrees relative to an initial angle.

Further, the cat litter cleaning method further includes the following step:
making the separator rotate forwardly after discharging the excrement, to approach the inside of the container, and then rotate together with the container to an initial position.

Further, the stirring chamber is configured to be in an open state only when the excrement enters the stirring chamber.

An automatic cat litter tray includes:
a container provided with an opening configured to allow a pet to enter and leave the container therethrough;
a first driving assembly, configured to drive the container to rotate from an initial angle to a first preset angle;
a separator provided inside the container and rotatable together with the container, wherein the separator is provided thereon with a transmission assembly; and
a second driving assembly, configured to drive the separator to rotate to a second preset angle after the container is rotated to a preset angle.

Further, the separator includes a grille plate and two guiding strips provided at two sides of the grille plate, and a distance between the two guiding strips gradually decreases from a front end of the grille plate to a rear end of the grille plate.

Further, the separator is rotatably connected to and inside the container through at least one rotating shaft, and the at least one rotating shaft extends out of a side wall of the container, and an end of the at least one rotating shaft is provided with the transmission assembly.

Further, the transmission assembly includes a first gear provided at the end of the at least one rotating shaft. When the container is rotated to the first preset angle, the first gear is just drivingly connected with the second driving assembly.

Further, the automatic cat litter tray further includes a base. The base is provided thereon with several brackets for supporting the container. A side edge of the container is fixedly connected with a second gear. The second gear is drivingly connected with the first driving assembly. The second driving assembly is provided on one side of the brackets, and includes a separator driving motor and a third gear drivingly connected with the separator driving motor. The third gear and the first gear are provided in parallel, and when the container is rotated to the first preset angle, the first gear is just meshed with the third gear.

Further, a side edge of the container is provided with a second gear. The second gear is drivingly connected with the first driving assembly. The second driving assembly is provided on the second gear and rotates with the second gear, and when the container is rotated to the first preset angle, the second driving assembly drives, through the transmission assembly, the at least one rotating shaft to drive the separator to rotate.

Further, the transmission assembly includes a first gear provided at the end of the at least one rotating shaft. The second driving assembly further includes a separator driving motor and a third gear drivingly connected with the separator driving motor, and the third gear is meshed with the first gear.

Further, the automatic cat litter tray further includes a base. The base is provided thereon with several brackets for supporting the container. The second gear includes an external gear and an internal gear provided in a stacked manner. An accommodating cavity for accommodating the separator driving motor is provided between the external gear and the internal gear. The first gear and the second gear are both provided between the second gear and the container.

Further, the automatic cat litter tray further includes an excrement tail treatment device. The excrement tail treatment device includes:
a stirring chamber provided with an opening at a top thereof, wherein the opening of the stirring chamber is provided corresponding to an end of the separator, the stirring chamber communicates with a water inlet pipe, and the water inlet pipe is provided thereon with a water inlet valve for controlling water inlet;
a water outlet pipe provided at a bottom of the stirring chamber and communicating with the stirring chamber, wherein the water outlet pipe communicates with an external sewer pipeline, and the water outlet pipe is provided with a water outlet valve or a water outlet pump for controlling water outlet; and
a stirring blade provided in the stirring chamber, for breaking excrement in the stirring chamber.

Further, the top of the stirring chamber is movably connected with a sealing cover. The sealing cover is further drivingly connected with a third driving assembly, wherein the third driving assembly is configured to open the sealing cover only when the excrement enters the stirring chamber.

Further, the bottom of the stirring chamber is inclined towards one side. The water outlet pump is provided at the bottom of the stirring chamber and communicates with the external sewer pipeline through the water outlet pipe. The stirring blade is further drivingly connected with a stirring motor. The stirring motor is provided above the stirring chamber. The stirring blade extends into the stirring chamber from above the stirring chamber.

Further, the top end of the stirring chamber is further provided with a plurality of drain holes. The drain holes are provided surrounding the opening, and the drain holes communicate with the water inlet pipe, for circumferentially flushing water into the stirring chamber.

Beneficial effects: for the cat litter cleaning method provided in the present application, by changing a rotating method of the container, the container and the separator are first rotated as a whole, so that the cat litter is completely in contact with the separator, the excrement is separated, and then the separator is separately rotated so as to clean up and discharge the excrement. Compared with the existing solution, the container has a smaller rotation angle, and does not need to be turned over as a whole by more than 360 degrees, thereby reducing the energy consumption, and meanwhile also reducing rolling degree of the cat litter in the container, and thus noises are reduced, and the separator may be separately detached or directly cleaned separately through the opening, which improves the hygienic cleaning effect. Moreover, an overall turnover angle is smaller, and correspondingly a volume of the whole device is also smaller, thus there is no need to occupy too much space.

### BRIEF DESCRIPTION OF DRAWINGS

FIG. 1 is a schematic flow diagram of steps of an embodiment of a cat litter cleaning method of the present application;
FIG. 2 is an exploded structural schematic diagram of Embodiment 1 of an automatic cat litter tray of the present application;
FIG. 3 is a three-dimensional schematic diagram of an initial state of the automatic cat litter tray shown in FIG. 2;
FIG. 4 is a three-dimensional schematic diagram of a container, in a state of a rotation process, of the automatic cat litter tray shown in FIG. 2;
FIG. 5 is a three-dimensional schematic diagram of a state of a process of discharging excrement from the automatic cat litter tray shown in FIG. 2;
FIG. 6 is a three-dimensional structural schematic diagram of another embodiment of the automatic cat litter tray of the present application;
FIG. 7 is an exploded structural schematic diagram of an excrement tail treatment device of the automatic cat litter tray shown in FIG. 6;
FIG. 8 is a three-dimensional structural schematic diagram of Embodiment 2 of an automatic cat litter tray of the present application;
FIG. 9 is an exploded structural schematic diagram of the automatic cat litter tray shown in FIG. 8;
FIG. 10 is an exploded structural schematic diagram of an excrement tail treatment device of the automatic cat litter tray shown in FIG. 8; and
FIG. 11 is a sectional structural schematic diagram of the excrement tail treatment device shown in FIG. 10.

### DETAILED DESCRIPTION OF EMBODIMENTS

In order to make the objectives, technical solutions and advantages of the present application clearer and more understandable, the present application is further described in detail below in combination with drawings and embodiments. It should be understood that the specific embodiments described herein are only used to explain the present application, but not to limit the present application. Based on the embodiments in the present application, all of other embodiments obtained by those ordinarily skilled in the art without using any inventive efforts shall fall within the scope of protection of the present application.

It should be noted that "first", "second" and so on involved in the present application are merely used for descriptive purpose, but should not be construed as indicating or implying importance in the relativity or suggesting the number of related technical features. Therefore, a feature defined with the term "first" or "second" may explicitly or implicitly mean that at least one such feature is included. In addition, the technical solutions between various embodiments may be combined with each other, but must be based on that they could be implemented by those ordinarily skilled in the art. When a combination of the technical solutions is contradictory or cannot be implemented, such combination of the technical solutions should not be considered existing, nor is within the scope of protection claimed in the present application.

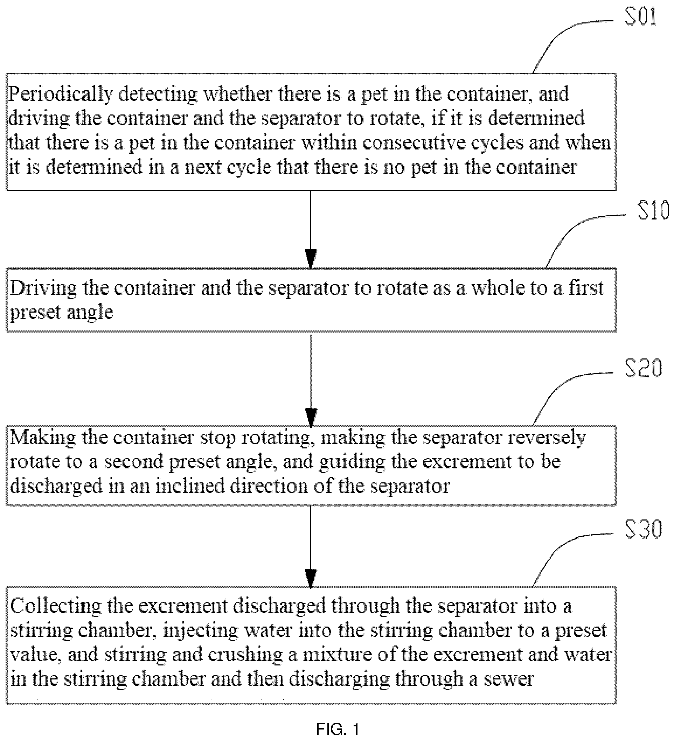

Referring to an embodiment of a cat litter cleaning method of the present application as shown in FIG. 1, the cat litter cleaning method includes the following steps:
S10: driving a container and a separator to rotate as a whole to a first preset angle. The separator is provided in the container, and the separator includes a grille plate. In an initial state, the grille plate is located in the container and is approximately vertical. Cat litter is laid in the container at a bottom. After a pet finishes the defecating, if the cat litter in the container needs to be cleaned, the container is rotated so as to drive the separator to also rotate synchronously, and thus the separator is rotated from an approximately vertical state to be located at the bottom of the container, and sufficiently contacts the cat litter in the container. Small-particle cat litter thus passes through the separator, while large cat litter is blocked by the separator to be above/on the separator. The container and the separator continue to rotate up to the first preset angle, and then it proceeds to step S20.

S20: making the container stop rotating, separately driving the separator to rotate to a second preset angle, and guiding excrement to be discharged in an inclined direction of the separator. When the container and the separator are rotated up to the first preset angle, the separator has completed a filtration operation on the cat litter, and the excrement in the container is substantially isolated above/on the separator. In this case, the separator starts to rotate in a rotation direction of the container up to the second preset angle, and at this time, the separator is in an inclined state, so as to guide and discharge the excrement. Preferably, the separator is driven to rotate around a bottom end thereof, and then the larger a rotation angle of the separator is, the higher the efficiency of screening the excrement from the cat litter is.

By changing a rotating method of the container, the container and the separator are first rotated as a whole, so that the cat litter is completely in contact with the separator, the excrement is separated, and then the separator is separately rotated so as to clean up and discharge the excrement. Compared with the existing solution, the container has a smaller rotation angle, and does not need to be turned over as a whole by more than 360 degrees, thereby reducing the energy consumption, and meanwhile also reducing rolling degree of the cat litter in the container 1, and thus noises are reduced, and the separator may be separately detached or directly cleaned separately through an opening, which improves the hygienic cleaning effect.

In another preferred embodiment, the cat litter cleaning method further includes following steps:
S30: collecting the excrement discharged through the separator into a stirring chamber, injecting water into the stirring chamber to a preset value, and stirring and crushing a mixture of the excrement and water in the stirring chamber and then discharging the resultant through a sewer. By collecting the excrement into the stirring chamber, injecting water and breaking the excrement, and discharging the resultant through a water discharge pipe into an external sewer, full-closed-loop management of the excrement is formed, and the cleaning efficiency is improved.

In another preferred embodiment, the stirring chamber is configured to be in an open state only when the excrement enters the stirring chamber. In this way, odor (smelly gas) of the excrement is avoided from diffusing into room through the stirring chamber, and indoor odor is reduced.

In another preferred embodiment, before driving the container and the separator to rotate, the cat litter cleaning method further includes the following steps:
S01: periodically detecting whether there is a pet in the container, and driving the container and the separator to rotate, if it is determined that there is a pet in the container within consecutive cycles and when it is determined in a next cycle that there is no pet in the container. Specifically, whether there is a pet in the container is periodically detected at intervals of, for example, 5 s. When it is detected that there is a pet in the container in two consecutive cycles, for example, two times of detection within 10 s, it is determined that the pet in the container is defecating. When it is detected that there is no pet in the container in the next cycle, it is determined that the pet has finished defecating, then a cleaning operation is started, and the container and the separator are driven to rotate. In this way, an automated level of cleaning the excrement is improved, and meanwhile it is unnecessary for a detector to remain in a turned-on state all the time, thus reducing the energy consumption.

In another preferred embodiment, the first preset angle is not greater than 180 degrees relative to the initial angle. A small rotation angle may reduce actions of driving the container as far as possible while ensuring the cleaning effect, thus enabling better energy-saving and environmentally-friendliness, and meanwhile also reducing noises caused by rolling of the cat litter in the container due to an excessive rotation amplitude.

In another preferred embodiment, the cat litter cleaning method further includes the following steps:
S21: making the separator rotate forwardly after discharging the excrement to approach the inner side of the container, and then rotate together with the container to an initial position. Thus, it is ensured that after the excrement is discharged, the separator first returns to the inner side of the container, and then returns to the initial position through rotation together with the container, so as to wait for starting of a next cleaning operation. In this way, by maintaining attachment between the separator and the container, the separator may be as close to the container as possible in the next cleaning operation, so as to ensure that most mixture of the cat litter and excrement passes above the separator, and thus the filtration operation is more thorough, and leakage of the excrement is avoided.

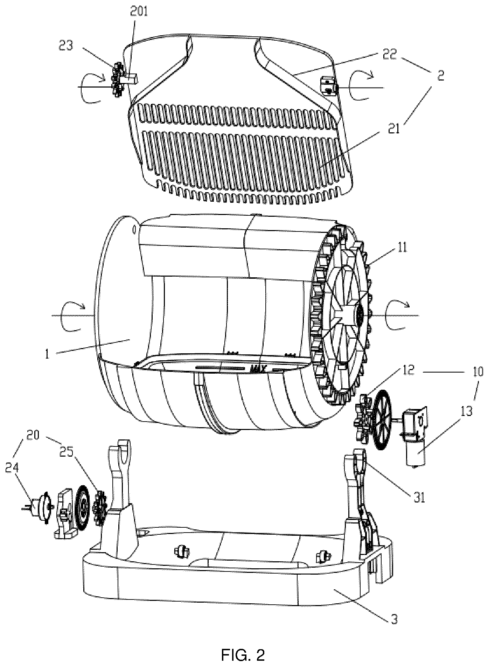

The present application further provides an automatic cat litter tray. With reference to Embodiment 1 as shown in FIGS. 2-5, the automatic cat litter tray includes: a container 1, a first driving assembly 10, a second driving assembly 20 and a separator 2. The container 1 is provided with an opening for allowing pets to enter and leave the container therethrough, and the separator 2 and the bottom of container 1 also may be cleaned through this opening. The first driving assembly 10 is configured to drive the container 1 to rotate from an initial angle to a first preset angle. The separator 2 is provided inside the container 1 and may rotate together with the container 1, and the separator 2 is provided with a transmission assembly. The second driving assembly 20 is configured to be drivingly connected with the transmission assembly after the container 1 is rotated to the preset angle, and drive the separator 2 to separately rotate to a second preset angle.

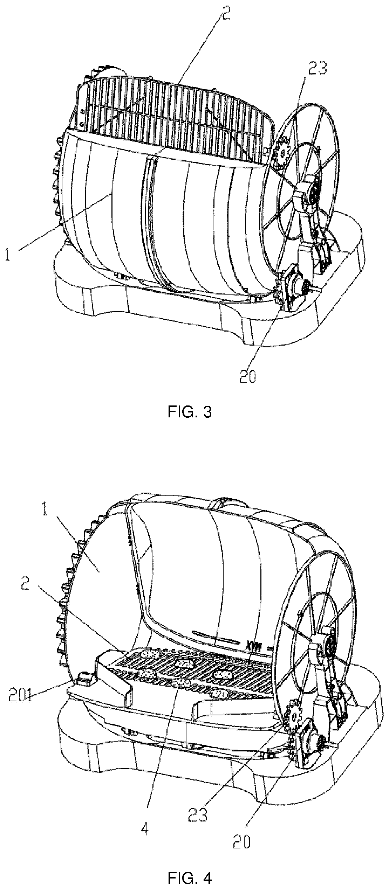

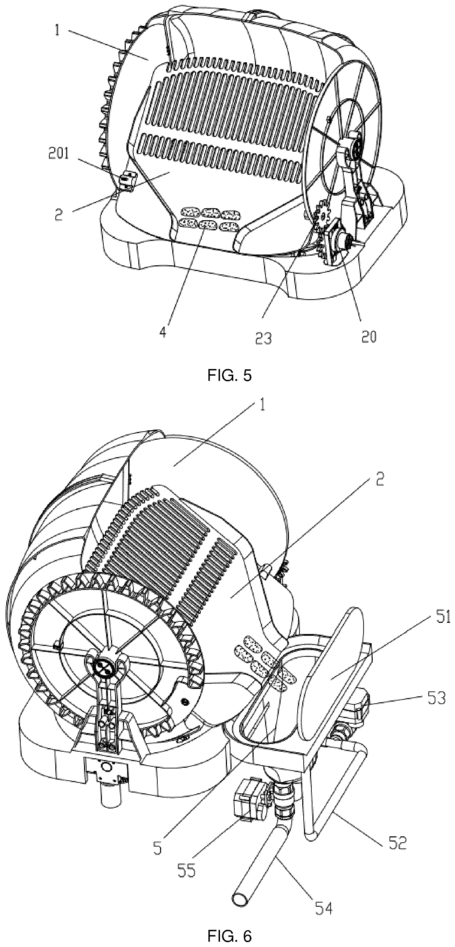

In an operation state, the automatic cat litter tray in the present embodiment is first in an initial state, as shown in FIG. 3, and in this case, the opening faces a direction which is at least horizontal or inclined upwards, for allowing the pets to leave and enter the container. The separator 2 is close to or in a vertical state. When a pet has finished defecating and leaves from the opening, the first driving assembly 10 drives the container 1 to rotate, the separator 2 rotates synchronously, and when the separator passes the bottom of the container 1, the cat litter rolls onto the separator 2, so as to form a state of filtration operation of the cat litter and the separator 2. As shown in FIG. 4, the cat litter with small granularity falls through the separator 2 onto the bottom of the container 1, while large excrement is isolated by the separator 2 to be above the separator 2. When the container 1 and the separator 2 continue to rotate to be at the second preset angle, the separator 2 is in an inclined state. In this case, driving connection is formed between the second driving assembly 20 and the transmission assembly, and the second driving assembly 20 drives the separator 2 to rotate, via the transmission assembly, and lifts the separator 2 from a small-inclination-angle state to an approximately vertical state, so as to guide the excrement to fall down under effect of its own gravity and leave a range of the container 1, thus completing an excrement cleaning operation, as shown in FIG. 5. In this way, by changing a rotating method of the container 1, the container 1 and the separator 2 are first rotated as a whole, so that the cat litter is completely in contact with the separator 2, the excrement is separated, and then the separator 2 is separately rotated so as to clean up and discharge the excrement. Compared with the existing solution, the container 1 has a smaller rotation angle, and does not need to be turned over as a whole by more than 360 degrees, thereby reducing the energy consumption, and meanwhile also reducing the rolling degree of the cat litter in the container 1, and thus noises are reduced, and the separator 2 may be separately detached or directly cleaned separately through the opening, thereby improving the hygienic cleaning effect. Moreover, an overall turnover angle is smaller, and correspondingly a volume of the whole device is also smaller, thus there is no need to occupy too much space.

Specifically, the separator 2 includes a grille plate 21 and two guiding strips 22 provided at two sides of the grille plate 21, wherein a distance between the two guiding strips 22 gradually decreases from a front end of the grille plate 21 to a rear end thereof. The front end of the grille plate 21 is provided with a pointed end, for realizing the effect of scooping the cat litter during rotation. The guiding strips 22 are provided for guiding the scooped excrement to be discharged along a specified track, so as to avoid the excrement from falling back into the container 1 from the two sides of the grille plate 21.

Two ends of the separator 2 are detachably and rotatably connected to an inner wall of the container 1 through shafts, wherein at least one shaft is a rotating shaft 201. The rotating shaft 201 extends out of the side wall of the container 1, and an end of the rotating shaft 201 is provided with the transmission assembly. In this way, the separator 2 may be detached from the container 1 and separately cleaned, thereby improving the cleaning convenience. Moreover, by providing the transmission assembly and the separator 2 respectively at two sides of the container 1, occurrence of a phenomenon that the excrement easily contaminates the transmission assembly when the transmission assembly is provided inside the container 1 is avoided.

Moreover, the pointed end of the grille plate 21 of the separator 2d is directed towards the rotation direction of the container 1 and the separator 2, and the rotating shaft is located at a rear end of the separator 2. When the container 1 reaches the first preset angle, a center of gravity of the separator 2 is still in front of the rotating shaft, thereby avoiding occurrence of a phenomenon that the separator 2 is turned over under the effect of its own gravity.

The transmission assembly includes a first gear 23 provided at the end of the rotating shaft 201. When the container 1 is rotated to the first preset angle, the first gear 23 is just drivingly connected with the second driving assembly 20, so that it can drive the separator 2 to rotate under the effect of the second driving assembly 20. By providing the gear, the structure is simple, and the reliability is higher.

Further, the automatic cat litter tray further includes a base 3, wherein the base 3 is provided thereon with several brackets 31 for supporting the container 1, and the container 1 may be detached from the brackets 31 so as to facilitate separate cleaning. A side edge of the container 1 is provided with a second gear 11. The second gear 11 is directly integrally molded with the side edge of the container 1, thereby reducing the number of components, thus improving the reliability of the device, and reducing the assembling complexity. The second gear 11 is drivingly connected with the first driving assembly 10. The first driving assembly 10 includes a container motor 13 and a fourth gear 12 drivingly connected with the container motor 13. The fourth gear 12 is meshed with the second gear 11. The second driving assembly 20 is provided on one side of the bracket 31, and includes a separator driving motor 24 and a third gear 25 drivingly connected with the separator driving motor 24. The third gear 25 and the first gear 23 are located in the same plane. When the container 1 is rotated to the first preset angle, the first gear 23 is just meshed with the third gear 25.

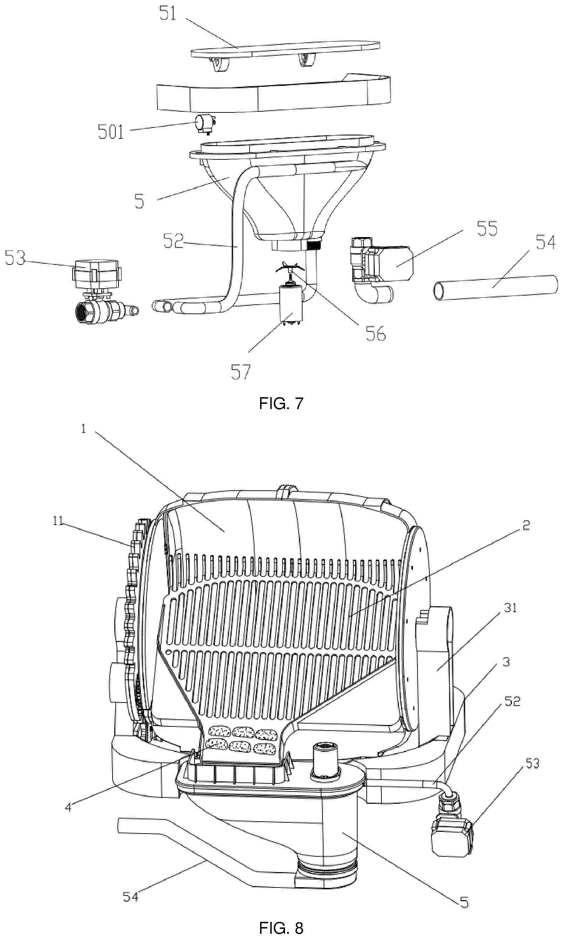

As further optimization of the present embodiment, the automatic cat litter tray further includes an excrement tail treatment device. Referring to FIGS. 6 and 7, the excrement tail treatment device includes: a stirring chamber 5, a water outlet pipe 54, a water inlet pipe 52 and a stirring blade 56. The stirring chamber 5 is provided with an opening at a top thereof, and the opening of the stirring chamber 5 is provided corresponding to the end of the separator 2. The stirring chamber 5 communicates with the water inlet pipe 52, and the water inlet pipe 52 is provided with a water inlet valve 53 for controlling water inlet.

The water outlet pipe 54 is provided at a bottom of the stirring chamber 5 and communicates with the stirring chamber 5. The water outlet pipe 54 communicates with an external sewer pipeline, and the water outlet pipe 54 is provided with the water outlet valve 55 for controlling water outlet. The stirring blade 56 is provided in the stirring chamber 5, for breaking the excrement in the stirring chamber 5. The stirring blade 56 is drivingly connected with a stirring motor 57 for driving the stirring blade 56 to rotate so as to break the excrement.

After the excrement enters the stirring chamber 5, the water inlet valve 53 is started, the water inlet pipe 52 starts to inject water into the stirring chamber 5 to a preset amount of water, and then the water inlet valve 53 is closed. In this case, the excrement and water form a mixture in the stirring chamber 5, and the stirring blade 56 starts to rotate and break the mixture. After a preset time of rotation, the water outlet valve 55 is turned on to discharge the mixture in the stirring chamber 5 to the external sewer pipeline, thus completing an excrement tail treatment operation.

Further, the top of the stirring chamber 5 is movably connected with a sealing cover 51, the sealing cover 51 is further drivingly connected with a third driving assembly, and the third driving assembly is configured to open the sealing cover 51 only when the excrement enters the stirring chamber 5. Specifically, the third driving assembly is a stirring cover opening and closing motor 501. In this way, when the excrement enters the stirring chamber 5, the sealing cover 51 is opened, and the sealing cover 51 is closed at other time, so as to avoid odor gases in the sewer pipeline or the stirring chamber 5 from escaping, thereby achieving the effects of environmental protection and deodorization.

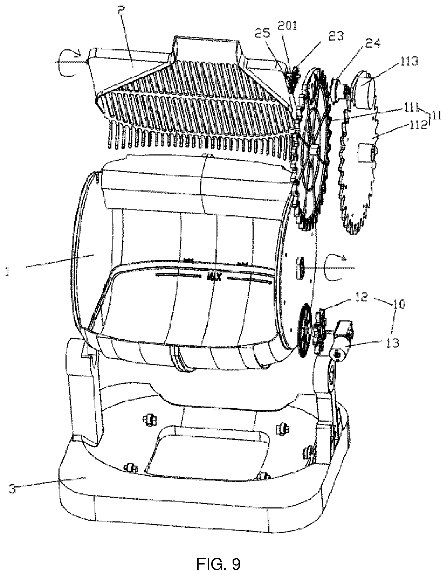

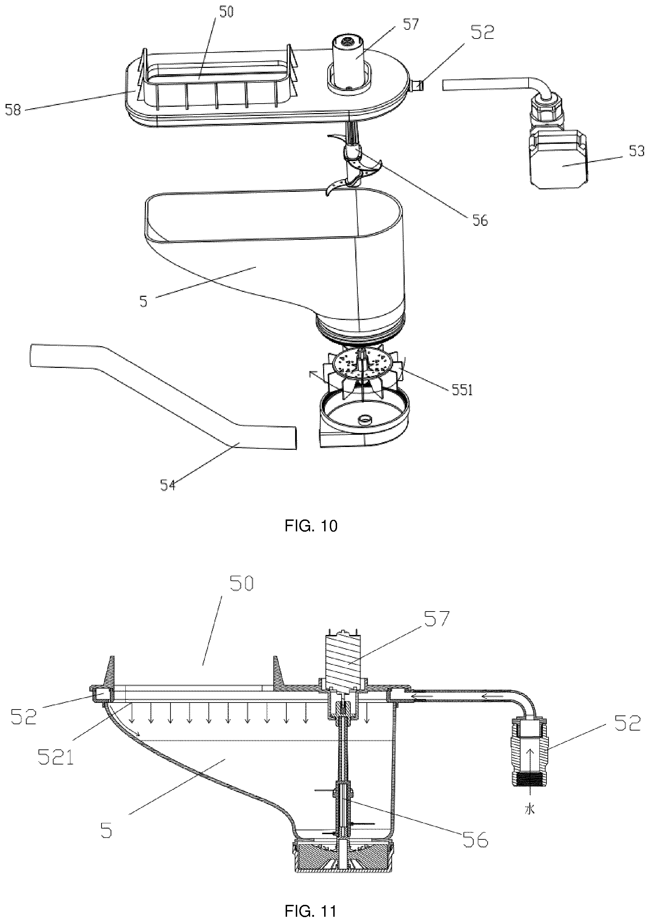

Embodiment 2 of the automatic cat litter tray in the present application shown in FIGS. 6-11, compared with Embodiment 1, is different in that the side edge of the container 1 is fixedly connected with the second gear 11, the second gear 11 is drivingly connected with the first driving assembly 10, the second driving assembly is provided on the second gear 11 and is rotated along with the second gear 11, and when the container 1 is rotated to the first preset angle, the second driving assembly drives, through the transmission assembly, the rotating shaft 201 to drive the separator 2 to rotate. By providing the second driving assembly on the second gear 11, during the rotation of the second gear 11, the second driving assembly moves together therewith, and the transmission assembly and the second driving assembly are maintained a driving connection state all the time, thereby avoiding a situation that the two are disengaged from and disconnected with each other due to movement, and improving the stability of the whole device.

Further, the transmission assembly includes the first gear 23 provided at the end of the rotating shaft 201, and the second driving assembly further includes a separator driving motor 24 and the third gear 25 drivingly connected with the separator driving motor 24, wherein the third gear 25 is meshed with the first gear 23. In this way, the separator driving motor 24 drives the third gear 25, the first gear 23, and the rotating shaft 201 in sequence to rotate, so as to drive the separator 2 to rotate. A gear ratio of the first gear 23 to the third gear 25 may be changed according to a desired lifting angle of the separator 2, thus achieving the effect of adjusting the lifting angle of the separator 2. Moreover, in some other embodiments, the separator driving motor 24 also may be directly drivingly connected with the rotating shaft 201, so as to more directly transmit a torque, and such a structural change still falls within the scope of protection of the present application.

Optionally, the automatic cat litter tray further includes a base, wherein the base is provided thereon with several brackets 31 for supporting the container 1. The second gear 11 includes an external gear 112 and an internal gear 111 provided in a stacked manner, and an accommodating cavity 113 for accommodating the separator driving motor 24 is provided between the external gear 112 and the internal gear 111. The first gear 23 and the second gear 11 are both provided between the second gear 11 and the container 1. By dividing the second gear 11 into the inner gear 111 and the outer gear 112 which may be engaged with each other, and providing the accommodating cavity between the outer gear 112 and the inner gear 111 so as to mount the separator driving motor 24, an effect of protecting the separator driving motor 24 is achieved so as to avoid contamination by the cat litter or dust, and meanwhile, the effect of fixing the separator driving motor 24 is also achieved, so as to prevent it from falling off due to vibration during movement.

Further, in the excrement tail treatment device, the stirring chamber 5 is provided with a cover plate 58 at a top thereof, wherein the cover plate 58 is provided with an opening 50, and the sealing cover which may be driven to open as described in the preceding Embodiment 1 is provided on the opening. The bottom of the stirring chamber 5 is inclined towards one side for guiding the excrement to fall down. The bottom of the stirring chamber 5 is provided with a water outlet pump 551 and communicates with the external sewer pipeline through the water outlet pipe 54. The stirring blade 56 is further drivingly connected with the stirring motor 57. The stirring motor 57 is provided above the stirring chamber 5. The stirring blade 56 extends into the stirring chamber 5 from above the stirring chamber 5. By providing the stirring blade 56 to be inserted into the stirring chamber 5 from top to bottom, the stirring motor 57 is provided above the stirring chamber 5, so that the stirring motor 57 is avoided from contacting the inside of the stirring chamber 5, thus there is no need to supply too much protection for the stirring motor 57, thus saving costs.

The stirring chamber 5 is further provided with a plurality of drain holes 521 at a top end thereof, wherein the drain holes 521 are provided surrounding the top end of the stirring chamber 5, and the drain holes 521 communicate with the water inlet pipe 52, for circumferentially flushing water into the stirring chamber 5, and thus a good flushing effect is achieved, the inside of the stirring chamber is avoided from being contaminated by the excrement, which is more hygienic. Specifically, a periphery of the cover plate 58 is provided with a flushing water pipe, and the drain holes 521 are provided on the flushing water pipe. The water inlet pipe 52 also may be circumferentially wound at a bottom of the cover plate 58, and the drain holes 521 are provided on the water inlet pipe 52.

The above are merely preferred embodiments of the present application, and it should be indicated that those ordinarily skilled in the art still could make improvements and modifications, without departing from the principle of contents of the present application, and all of these improvements and modifications also should be considered as the scope of protection of the present application.

### INDUSTRIAL APPLICABILITY

The present application provides the cat litter cleaning method and the automatic cat litter tray, belonging to the field of pet cleaning devices. The cat litter cleaning method includes: driving the container and the separator to rotate as a whole to the first preset angle; and making the container stop rotating, driving the separator to rotate to the second preset angle, and guiding the excrement to be discharged un an inclined direction of the separator. By changing the rotating method of the container, the container and the separator are first rotated as a whole, so that the cat litter is completely in contact with the separator, the excrement is separated, and then the separator is separately rotated so as to clean up and discharge the excrement. Compared with the existing solution, the container has a smaller rotation angle, and does not need to be turned over as a whole by more than 360 degrees, thereby reducing the energy consumption, and meanwhile also reducing the rolling degree of the cat litter in the container, and thus noises are reduced, and the separator may be separately detached or directly cleaned separately through the opening, which improves the hygienic cleaning effect.

In addition, it may be understood that the cat litter cleaning method and the automatic cat litter tray in the present application are reproducible, and may be applied in various industrial applications. For example, the automatic cat litter tray in the present application may be applied to the field of pet cleaning devices.

## Claims

1. A cat litter cleaning method, **characterized by** comprising steps of:
driving a container and a separator to rotate as a whole to a first preset angle; and
making the container stop rotating, driving the separator to rotate to a second preset angle, and guiding excrement to be discharged in an inclined direction of the separator.

2. The cat litter cleaning method according to claim 1, wherein the cat litter cleaning method further comprises steps of:
collecting the excrement discharged through the separator into a stirring chamber, injecting water into the stirring chamber to a preset value, and stirring and crushing a mixture of the excrement and water in the stirring chamber and then discharging through a water discharge pipe.

3. The cat litter cleaning method according to claim 1, wherein before driving the container and the separator to rotate, the cat litter cleaning method further comprises steps of:
periodically detecting whether there is a pet in the container, and driving the container and the separator to rotate, if it is determined that there is a pet in the container within consecutive cycles and when it is determined in a next cycle that there is no pet in the container.

4. The cat litter cleaning method according to claim 1, wherein the first preset angle is not greater than 180 degrees relative to an initial angle.

5. The cat litter cleaning method according to claim 1, wherein the cat litter cleaning method further comprises a step of:
making the separator rotate forwardly after discharging the excrement, to approach an inside of the container, and then rotate together with the container to an initial position.

6. The cat litter cleaning method according to claim 2, wherein the stirring chamber is configured to be in an open state only when the excrement enters the stirring chamber.

7. An automatic cat litter tray, **characterized by** comprising:
a container provided with an opening configured to allow a pet to enter and leave the container;
a first driving assembly, configured to drive the container to rotate from an initial angle to a first preset angle;
a separator provided inside the container and rotatable together with the container, wherein the separator is provided with a transmission assembly; and
a second driving assembly, configured to drive the separator to rotate to a second preset angle after the container is rotated to a preset angle.

8. The automatic cat litter tray according to claim 7, wherein the separator comprises a grille plate and two guiding strips provided at two sides of the grille plate, and a distance between the two guiding strips gradually decreases from a front end to a rear end of the grille plate.

9. The automatic cat litter tray according to claim 7, wherein the separator is rotatably connected to and inside the container through at least one rotating shaft, and the at least one rotating shaft extends out of a side wall of the container, and an end of the at least one rotating shaft is provided with the transmission assembly.

10. The automatic cat litter tray according to claim 9, wherein the transmission assembly comprises a first gear provided at an end of the rotating shaft, and when the container is rotated to the first preset angle, the first gear is just drivingly connected with the second driving assembly.

11. The automatic cat litter tray according to claim 10, wherein the automatic cat litter tray further comprises a base, the base is provided thereon with several brackets configured for supporting the container, a side edge of the container is fixedly connected with a second gear, the second gear is drivingly connected with the first driving assembly, the second driving assembly is provided on one side of the brackets, and comprises a separator driving motor and a third gear drivingly connected with the separator driving motor, the third gear and the first gear are provided in parallel, and when the container is rotated to the first preset angle, the first gear is just meshed with the third gear.

12. The automatic cat litter tray according to claim 9, wherein a side edge of the container is provided with a second gear, the second gear is drivingly connected with the first driving assembly, the second driving assembly is provided on the second gear and is configured to rotate with the second gear, and when the container is rotated to the first preset angle, the second driving assembly drives, through the transmission assembly, the rotating shaft to drive the separator to rotate.

13. The automatic cat litter tray according to claim 12, wherein the transmission assembly comprises a first gear provided at an end of the rotating shaft, the second driving assembly further comprises a separator driving motor and a third gear drivingly connected with the separator driving motor, and the third gear is meshed with the first gear.

14. The automatic cat litter tray according to claim 13, wherein the automatic cat litter tray further comprises a base, the base is provided thereon with several brackets for supporting the container, the second gear comprises an external gear and an internal gear provided in a stacked manner, an accommodating cavity configured for accommodating the separator driving motor is provided between the external gear and the internal gear, and the first gear and the second gear are both provided between the second gear and the container.

15. The automatic cat litter tray according to claim 7, wherein the automatic cat litter tray further comprises an excrement tail treatment device, comprising:
a stirring chamber provided with an opening at a top thereof, wherein the opening of the stirring chamber is provided corresponding to an end of the separator, the stirring chamber communicates with a water inlet pipe, and the water inlet pipe is provided with a water inlet valve configured for controlling water inlet;
a water outlet pipe provided at a bottom of the stirring chamber and communicating with the stirring chamber, wherein the water outlet pipe communicates with an external sewer pipeline, and the water outlet pipe is provided with a water outlet valve or a water outlet pump configured for controlling water outlet; and
a stirring blade provided in the stirring chamber and configured for breaking excrement in the stirring chamber.

16. The automatic cat litter tray according to claim 15, wherein the top of the stirring chamber is movably connected with a sealing cover, the sealing cover is further drivingly connected with a third driving assembly, and the third driving assembly is configured to open the sealing cover only when the excrement enters the stirring chamber.

17. The automatic cat litter tray according to claim 15, wherein the bottom of the stirring chamber is inclined towards one side, the water outlet pump is provided at the bottom of the stirring chamber and communicates with the external sewer pipeline through the water outlet pipe, the stirring blade is further drivingly connected with a stirring motor, the stirring motor is provided above the stirring chamber, and the stirring blade extends into the stirring chamber from above the stirring chamber.

18. The automatic cat litter tray according to claim 15, wherein the stirring chamber is further provided with a plurality of drain holes at a top end thereof, the drain holes are provided surrounding the opening, and the drain holes communicate with the water inlet pipe, for circumferentially flushing water into the stirring chamber.
